# EUROPÄISCHE PATENTSCHRIFT

(11) **EP 1 033 559 B1**
(45) Veröffentlichungstag und Bekanntmachung des Hinweises auf die Patenterteilung: **07.07.2010**
(21) Anmeldenummer: 00103683.9
(22) Anmeldetag: 22.02.2000
(51) Int. Cl.: G01F 3/22

(54) **Kurbeltrieb**
Crank drive
Transmission à manivelle

(30) Priorität: 02.03.1999 DE 19909025
(43) Veröffentlichungstag der Anmeldung: 06.09.2000
(73) Patentinhaber: Elster GmbH, 55252 Mainz-Kastel (DE)
(72) Erfinder: Penning, Klaus, 49594 Alfhausen (DE)
(74) Vertreter: Harlacher, Mechthild

(56) Entgegenhaltungen:
- DE-A- 4 205 135
- US-A- 2 753 712

## Beschreibung

Die Erfindung betrifft einen Kurbeltrieb für eine temperaturempfindliche Vorrichtung, insbesondere für einen Balgengaszähler, mit
einem um eine Achse drehbaren Teil,
- mindestens einem Kurbelelement, das drehfest mit dem drehbaren Teil verbunden ist,
- mindestens einem Schwenkarm, der schwenkbar mit dem Kurbelelement verbunden ist,
- einem Abgriffelement, das mit dem Schwenkarm verbunden ist, und
- einem temperaturabhängigen Kompensationselement, das die Winkelposition des Schwenkarms bestimmt.

Balgengaszähler arbeiten mit mindestens einer Kammer, die von einer bewegbaren Membran in zwei Räume unterteilt ist. Die beiden Räume werden abwechselnd an einen Gaseinlass und einen Gasauslaß angeschlossen. Das zyklische Umschalten besorgt ein Schiebersystem, dessen hin- und hergehende Bewegungen von der Membran betätigt werden, und zwar unter Zwischenschaltung des Kurbeltriebs, wobei das Kurbelelement von der Membran angetrieben wird, während das Schiebersystem seinen Antrieb vom drehbaren Teil abgreift.

In aller Regel wird das drehbare Teil als Welle ausgebildet sein, während das Abgriffelement einen Kurbelzapfen darstellt. Anders ausgebildete Kurbeltriebe sind gleichermaßen denkbar. Beispielsweise kann das drehbare Teil eine einfache Scheibe darstellen, während das Abgriffelement als Bohrung für den Eingriff eines Bolzens ausgebildet ist.

Der Einsatzbereich des Kurbeltriebes ist äußerst vielfältig. Die Beschreibung der Erfindung soll allerdings anhand eines Balgengaszählers erfolgen, da hierin eine bevorzugte Anwendung der Erfindung zu sehen ist. Balgengaszähler sind temperaturempfindlich, und zwar vor allen Dingen im Hinblick auf die Temperaturabhängigkeit der Gasdichte (3K entsprechen einer Volumenänderung von ca. 1%). Das Gas wird durch Erdleitungen angeliefert und befindet sich daher im wesentlichen auf konstanter Temperatur. Liegt auch der Aufstellungsraum des Balgengaszählers im wesentlichen auf konstanter Temperatur, so treten ersichtlich keine Schwierigkeiten auf. Probleme ergeben sich hingegen, wenn der Balgengaszähler an der Außenwand eines Gebäudes angebracht wird und dort Temperaturschwankungen ausgesetzt ist, die ohne weiteres 60 bis 70K betragen können. Hier greift das temperaturabhängige Kompensationselement ein, welches die Winkelposition des Schwenkarms bestimmt.

Die US-A-2 753 712 offenbart die Merkmale des Oberbegriffs des Anspruchs 1. Ein Kurbeltrieb für eine temperaturempfindliche Vorrichtung, insbesondere für einen Balgengaszähler, zeigt ein um eine Achse drehbares Teil (crankshaft) und ein Kurbelelement, das aus einer Halterung (bracket) und einer mit dieser verbunden Platte besteht. Die Halterung ist drehfest mit dem drehbaren Teil verbunden ist (Spalte 1, Zeile 69 bis 70). Das Kurbelelement, welches in Fig. 2 dargestellt ist, wird insgesamt um die Achse des drehbaren Teils (crankshaft) gedreht. Ein Schwenkarm ist schwenkbar mit der Platte verbunden. Ein Abgriffelement ist fest mit einem Schwenkarm verbunden (Spalte 2, Zeile 4 bis Zeile 6, dessen Winkelposition von einem temperaturabhängigen Kompensationselement bestimmt wird. Ein Drehzapfen (pivot pin) dient dazu, mittels Drehung der Platte den Winkel bzw. die Neigung der Linie zwischen dem Abgriffselement und dem drehbaren Teil einzustellen bzw. zu justieren (Fig. 2). Wenn die Winkelposition des Schwenkarms temperaturabhängig verändert wird, bewegt sich das Abgriffselement in einem Schlitz der Platte. Der Schlitz verläuft geradlinig radial zwischen der Achse des drehbares Teil und dem Abgriffselement(Fig. 4). Mittels des temperaturabhängiges Kompensationselements wird der radiale Abstand zwischen dem Abgriffselement und der Achse des drehbaren Teils verstellt.

Aus der DE-A1-42 05 135 ist bekannt, den Schwenkarm so anzuordnen, dass das Kompensationselement das Abgriffelement im wesentlichen radial zur Achse des drehbaren Teils verstellt. Dies bewirkt, dass sich der Hub der Membran des Balgengaszählers ändert. Das pro Zählschritt durchgelassene Volumen passt sich also an die jeweils herrschende Außentemperatur an.

Es wurde gefunden, dass die Temperaturkompensation des Kurbeltriebs noch verbesserungsfähig ist. Dementsprechend liegt der Erfindung die Aufgabe zugrunde, die Temperaturkompensation des Kurbeltriebes zu verbessern.

Zur Lösung dieser Aufgabe ist der eingangs genannte Kurbeltrieb **dadurch gekennzeichnet, dass** das Abgriffelement relativ zum Schwenkarm von einer Steuereinrichtung verstellbar ist, die an die gerätespezifische Temperaturabhängigkeit der temperaturempfindlichen Vorrichtung angepasst ist.

Der Erfindung liegt die Erkenntnis zugrunde, dass die Temperaturabhängigkeit der Vorrichtung, beispielsweise des Balgengaszählers, gerätespezifisch ist. Dies wurde bisher bei der Temperaturkompensation nicht berücksichtigt. Daher ergaben sich für unterschiedliche Bauarten unterschiedliche Fehlerkurven, mit dem Ergebnis, dass eine an einen Gerätetyp angepasste und dort auch ausreichend genaue Temperaturkompensation bei anderen Typen unzulässige Abweichungen der Fehlerkurve mit sich brachte.

Erfindungsgemäß hingegen ist die Steuereinrichtung an die gerätespezifische Temperaturabhängigkeit der Vorrichtung angepasst. Nach wie vor übernimmt der Schwenkarm eine temperaturabhängige Verstellung des Kurbelhubes in Abhängigkeit vom Kompensationselement. Diese Verstellung wird überlagert durch den Eingriff der Steuereinrichtung, die das Abgriffelement relativ zum Schwenkarm verstellt. Über die Steuereinrichtung lässt sich also die Fehlerkurve gerätespezifisch optimieren.

Vor allen Dingen bietet sich die Möglichkeit, das Abgriffelement nicht nur radial, sondern auch tangential zur Achse des drehbaren Teils zu verstellen. Dadurch ändert sich der Winkelversatz des Abgriffelements zum Kurbelelement und damit zum drehbaren Teil. In Anwendung auf den Balgengaszähler bedeutet dies, dass die Voreilung der Schiebersteuerung, bezogen auf die Hubbewegung der Membran, verändert wird. Bewirkt eine radiale Verstellung des Abgriffelements über den Hub der Membran eine Verschiebung der gesamten Fehlerkurve in Richtung auf die Null-Linie, so führt eine tangentiale Verstellung zu einer Abflachung der Fehlerkurve. Insgesamt lässt sich eine gerätespezifische Optimierung der Temperaturkompensation erzielen.

In Weiterbildung der Erfindung wird vorgeschlagen, die Steuereinrichtung mit dem temperaturabhängigen Kompensationselement zu koppeln, da letzteres bereits einen Temperatursensor darstellt, wobei die Kopplung vorzugsweise über den Schwenkarm des Abgriffelements erfolgt, dessen Winkelposition vom Kompensationselement bestimmt wird und damit einen temperaturabhängigen Wert darstellt.

Eine ganz besonders vorteilhafte Ausführungsform ist **dadurch gekennzeichnet, dass** die Steuereinrichtung eine im Kurbelelement ausgebildete Kulisse aufweist, in der das Abgriffelement geführt ist. Über die Form der Kulisse läßt sich in einfachster Weise die jeweilige Charakteristik der Temperaturkompensation einstellen. Nimmt das Kompensationselement eine Verschwenkung des Schwenkarmes vor, so erfolgt gleichzeitig eine Verstellung des Abgriffelements relativ zum Schwenkarm. Kurbelhub und Voreilung werden also durch ein und dieselbe Aktivierung des Kompensationselements an die jeweilige Temperatur angepaßt.

Besonders günstige Verhältnisse ergeben sich dadurch, daß das Abgriffelement relativ zum Schwenkarm in Richtung auf dessen Schwenkpunkt verstellbar ist.

Der Schwenkpunkt des Schwenkarms kann an beliebiger Stelle auf dem Kurbelelement angeordnet werden. Die mit der Schwenkbewegung des Schwenkarms überlagerte Verschiebung des Abgriffelements läßt beliebige Kulissenführungen zu.

Besonders vorteilhaft ist es, den Schwenkpunkt des Schwenkarms exzentrisch zur Achse des drehbaren Teils am Kurbelelement anzuordnen. Der Schwenkarm kann unter diesen Umständen im wesentlichen tangential zum Kurbelelement ausgerichtet werden, mit der Folge, daß die in das Abgriffelement eingeleiteten Kräfte ohne wesentliche Belastung des Schwenkarmes über die Führungswände der Kulisse auf das Kurbelelement übertragen werden.

Unter diesem Gesichtspunkt ist es besonders vorteilhaft, daß die Linie zwischen dem Abgriffelement und dem Schwenkpunkt des Schwenkarms mit der Linie zwischen dem Abgriffelement und der Achse des drehbaren Teils einen im wesentlichen rechten Winkel bildet.

In Weiterbildung der Erfindung wird vorgeschlagen, daß das temperaturabhängige Kompensationselement am Kurbelelement abgestützt ist und einen gelenkig in den Schwenkarm eingreifenden Betätigungsarm aufweist, der im wesentlichen gegen den Schwenkpunkt des Schwenkarms gerichtet ist. Das Übersetzungsverhältnis zwischen dem Betätigungsarm des Kompensationselements und dem Schwenkarm kann auf diese Weise sehr einfache vorgewählt werden, da es von dem Abstand zwischen dem Schwenkpunkt des Schwenkarms und dem Eingriffspunkt des Betätigungsarms abhängt.

Vorteilhafterweise ist der Betätigungsarm des Kompensationselements als freies Ende eines spiralförmigen Bimetall-Elements ausgebildet.

Die Erfindung wird im folgenden anhand eines bevorzugten Ausführuhngsbeispiels im Zusammenhang mit der beiliegenden Zeichnung näher erläutert. Die Zeichnung zeigt in:

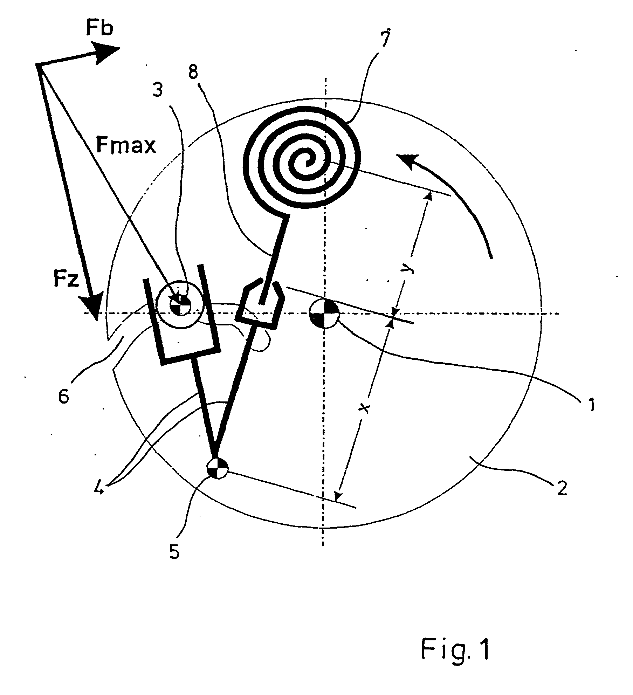

Figur 1 einen schematischen Grundriß eines Kurbeltriebes.

Der Kurbeltrieb weist ein drehbares Teil 1 in Form einer Welle auf, die drehfest mit einem scheibenförmigen Kurbelelement 2 verbunden ist. Das Kurbelelement 2 trägt ein Abgriffelement 3 in Form eines Kurbelzapfens.

Der Kurbeltrieb ist für eine temperaturempfindliche Vorrichtung vorgesehen, im vorliegenden Fall für einen Balgengaszähler. Die hin- und herbewegbare Membran des Balgengaszählers ist mit dem Kurbelzapfen verbunden und treibt auf diese Weise die Welle an. Letztere trägt mindestens einen Exzenter zum Betätigen eines Schiebersystems und ist ferner mit einem Zählwerk verbunden.

Das Abgriffelement 3 sitzt verschieblich in einem Schwenkarm 4, welcher in einem Schwenkpunkt 5 auf dem Kurbelelement 2 gelagert ist. Außerdem greift das Abgriffelement 3 in eine Kulisse 6 des Kurbelelements 2 ein.

Zur Temperaturkompensation ist der Kurbeltrieb mit einem Kompensationselement 7 versehen, im vorliegenden Fall mit einem spiralförmigen Bimetall-Element, dessen freies Ende einen Betätigungsarm 8 bildet. Dieser greift gelenkig - vorzugsweise über eine Messerschneidenlagerung - in den Schwenkarm 4 ein und ist im wesentlichen gegen dessen Schwenkpunkt 5 gerichtet. Bei Temperaturänderungen verstellt das Kompensationselement 7 die Winkelposition des Schwenkarms 4. Dadurch ändert sich die Position des Abgriffelements 3, und zwar, bezogen auf die Achse des drehbaren Teils 1, sowohl in radialer als auch in tangentialer Richtung. Eine Verstellung in radialer Richtung ändert den Hub der Membran (bei ansteigender Temperatur vergrößert sich der Hub), eine Verstellung in tangentialer Richtung die Voreilung des Schiebersystems.

Der Verlauf der Kulisse 6 wird experimentell in Abhängigkeit vom Verhältnis der Fehleranteile bestimmt und ist an die gerätespezifische Temperaturabhängig des zugehörigen Balgengaszählers angepaßt. Auf diese Weise lassen sich der Hub der Membran und die Voreilung des Schiebersystems sehr exakt an die jeweilige Außentemperatur anpassen. Ein optimierter Verlauf der Fehlerkurve (aufgetragen über dem Volumenstrom) ist die Folge. Der Verlauf der Kulisse 6 wird individuell an jeden Gerätetyp angepaßt.

Fertigungstechnisch ergibt sich der große Vorteile, daß eine Vielzahl von Gerätetypen mit ein und demselben Kurbeltrieb arbeiten kann, wobei lediglich die Kulisse 6 des Kurbelelements 2 unterschiedlich gestaltet sein muß. Weitere Änderungen - sofern erforderlich - sind auf der Basis der Standard-Bauelemente ohne weiteres möglich. So zeigt Figur 1 die Abstände X und Y, die das Übersetzungsverhältnis zwischen dem Kompensationselement 7 und dem Schwenkarm 4 bestimmen. Eine Änderung und Anpassung des Übersetzungsverhältnisses ist also problemlos möglich, sei es durch Verschieben des Kompensationselements, sei es durch Auswechseln des Schwenkarms.

Der Schwenkpunkt 7 des Schwenkarms 4 liegt exzentrisch zur Achse des drehbaren Teils 1. Dabei ist die Anordnung so getroffen, da die Hauptkomponente Fz der maximal zu übertragenden Kraft Fmax vom Abgriffelement 3, welches in Richtung auf den Schwenkpunkt 5 des Schwenkarms 4 verschieblich mit diesem verbunden ist, über die Kulisse 6 direkt in das Kurbelelement 2 eingeleitet wird. Die Achse des drehbaren Teils 1, der Schwenkpunkt 5 des Schwenkarms 4 und das Abgriffelement 3 bilden ein im wesentlichen rechtwinkliges Dreieck, dessen Hypotenuse zwischen der Achse des drehbaren Teils 1 und dem Schwenkpunkt 5 verläuft.

Von wesentlicher Bedeutung ist, daß das Kompensationselement 7 nicht von den über das Abgriffelement 3 zu übertragenden Kräften beeinflußt wird.

Der Kurbeltrieb erlaubt kleinste Abmessungen, so daß auch sehr kleine Zählerbaugrößen möglich sind.

Im Rahmen der Erfindung sind durchaus Abwandlungsmöglichkeiten gegeben. Allerdings wird man in der Regel den bevorzugten Grundaufbau beibehalten, wonach Welle und Kurbelzapfen achsparallel ausgerichtet sind, während sich die Kompensationsbewegung des Schwenkarms in einer achssenkrechten Ebene vollzieht. Anstelle des spiralförmigen Bimetall-Kompensationselements kommen auch andere Temperatursensoren in Frage, und zwar bevorzugt solche, die ohne Servo-Unterstützung ausreichend große Verstellkräfte erzeugen. Die exzentrische Lagerung des Schwenkarms ist, wie erläutert, besonders vorteilhaft, jedoch besteht auch die Möglichkeit, den Schwenkpunkt des Schwenkarmes bei entsprechender Gestaltung der Kulisse in die Achse der Welle zu verlegen. In jedem Falle wird man bemüht sein, die Kinematik so zu gestalten, daß einerseits kleine Temperaturänderungen merkliche Verschiebungen des Kurbelzapfens hervorrufen und daß andererseits ein großer Temperaturbereich für die Kompensation zur Verfügung steht.

Die Grundeinstellung des Kurbeltriebs erfolgt bei durchschnittlicher Normaltemperatur von 15°C oder 20°C. Bei dieser Temperatur nimmt der Schwenkarm eine definierte Position ein, so daß sich auch der Kurbelzapfen in definierter Position befindet. Dieser Position müssen durch entsprechende Voreinstellung der Membranhub und die Schieber-Voreilung angepaßt werden. Hierzu wird, anders als in Figur 1 dargestellt, das Kurbelelement als Ganzes gegenüber der Welle verstellt, und zwar derart, daß der Kurbelzapfen sowohl in tangentialer, als auch in radialer Richtung exakt positioniert ist.

## Patentansprüche

1. Kurbeltrieb für eine temperaturempfindliche Vorrichtung, insbesondere für einen Balgengaszähler, mit
- einem um eine Achse drehbaren Teil (1),
- mindestens einem Kurbelelement (2), das drehfest mit dem drehbaren Teil (1) verbunden ist,
- mindestens einem Schwenkarm (4), der schwenkbar mit dem Kurbelelement (2) verbunden ist,
- einem Abgriffelement (3), das mit dem Schwenkarm (4) verbunden ist, und
- einem temperaturabhängigen Kompensationselement (7), das die Winkelposition des Schwenkarms (4) bestimmt,
**dadurch gekennzeichnet,**
**daß** das Abgriffelement (3) relativ zum Schwenkarm (4) von einer Steuereinrichtung verstellbar ist, die an die gerätespezifische Temperaturabhängigkeit der temperaturempfindlichen Vorrichtung angepaßt ist.

2. Kurbeltrieb nach Anspruch 1, **dadurch gekennzeichnet, daß** die Steuereinrichtung mit dem temperaturabhängigen Kompensationselement (7) gekoppelt ist.

3. Kurbeltrieb nach Anspruch 2, **dadurch gekennzeichnet, daß** die Steuereinrichtung über den Schwenkarm (4) des Abgriffelements (3) mit dem temperaturabhängigen Kompensationselement gekoppelt ist.

4. Kurbeltrieb nach einem der Ansprüche 1 bis 3, **dadurch gekennzeichnet, daß** die Steuereinrichtung eine im Kurbelelement (2) ausgebildete Kulisse (6) aufweist, in der das Abgriffelement (3) geführt ist.

5. Kurbeltrieb nach einem der Ansprüche 1 bis 4, **dadurch gekennzeichnet, daß** das Abgriffelement (3) relativ zum Schwenkarm (4) in Richtung auf dessen Schwenkpunkt (5) verstellbar ist.

6. Kurbeltrieb nach einem der Ansprüche 1 bis 5, **dadurch gekennzeichnet, daß** der Schwenkpunkt (5) des Schwenkarms (4) exzentrisch zur Achse des drehbaren Teils (1) am Kurbelelement (2) angeordnet ist.

7. Kurbeltrieb nach Anspruch 6, **dadurch gekennzeichnet, daß** die Linie zwischen dem Abgriffelement (3) und dem Schwenkpunkt (5) des Schwenkarms (4) mit der Linie zwischen dem Abgriffelement (3) und der Achse des drehbaren Teils (1) einen im wesentlichen rechten Winkel bildet.

8. Kurbeltrieb nach einem der Ansprüche 1 bis 7, **dadurch gekennzeichnet, daß** das temperaturabhängige Kompensationselement (7) am Kurbelelement (2) abgestützt ist und einen gelenkig in den Schwenkarm (4) eingreifenden Betätigungsarm (8) aufweist, der im wesentlichen gegen den Schwenkpunkt (5) des Schwenkarms (4) gerichtet ist.

9. Kurbeltrieb nach Anspruch 8, **dadurch gekennzeichnet, daß** der Betätigungsarm (8) des Kompensationselements (7) als freies Ende eines spiralförmigen Bimetall-Elements ausgebildet ist.

## Claims

1. Crank drive for a temperature-sensitive device, in particular for a positive-displacement gas meter, with
- a part (1) rotatable about an axis,
- at least one crank element (2) which is connected fixedly to the rotatable part (1),
- at least one pivoting arm (4) which is connected pivotably to the crank element (2),
- a pick-off element (3) which is connected to the pivoting arm (4), and
- a temperature-dependent compensation element (7) which determines the angular position of the pivoting arm (4),
**characterized in that** the pick-off element (3) is adjustable in relation to the pivoting arm (4) by a control arrangement which is adapted to the appliance-specific temperature dependence of the temperature-sensitive device.

2. Crank drive according Claim 1, **characterized in that** the control arrangement is coupled to the temperature-dependent compensation element (7).

3. Crank drive according to Claim 2, **characterized in that** the control arrangement is coupled to the temperature-dependent compensation element via the pivoting arm (4) of the pick-off element (3).

4. Crank drive according to one of Claims 1 to 3, **characterized in that** the control arrangement has a slot (6) which is formed in the crank element (2) and in which the pick-off element (3) is guided.

5. Crank drive according to one of Claims 1 to 4, **characterized in that** the pick-off element (3) is adjustable in relation to the pivoting arm (4) in the direction of the pivot point (5) of the latter.

6. Crank drive according to one of Claims 1 to 5, **characterized in that** the pivot point (5) of the pivoting arm (4) is arranged eccentrically with respect to the axis of the rotatable part (1) on the crank element (2).

7. Crank drive according to Claim 6, **characterized in that** the line between the pick-off element (3) and the pivot point (5) of the pivoting arm (4) forms an essentially right angle with the line between the pick-off element (3) and the axis of the rotatable part (1).

8. Crank drive according to one of Claims 1 to 7, **characterized in that** the temperature-dependent compensation element (7) is supported on the crank element (2) and has an actuating arm (8) which engages into the pivoting arm (4) in an articulated manner and which is directed essentially towards the pivot point (5) of the pivoting arm (4).

9. Crank drive according to Claim 8, **characterized in that** the actuating arm (8) of the compensation element (7) is designed as the free end of a spiral bimetal element.

## Revendications

1. Transmission à manivelle pour un dispositif sensible à la température, notamment pour un compteur à gaz à soufflet, comprenant :
- une partie (1) pouvant tourner autour d'un axe,
- au moins un élément de manivelle (2) qui est connecté de manière solidaire en rotation à la partie rotative (1),
- au moins un bras pivotant (4) qui est connecté de manière pivotante à l'élément de manivelle (2),
- un élément de prise (3) qui est connecté au bras pivotant (4), et
- un élément de compensation dépendant de la température (7), qui détermine la position angulaire du bras pivotant (4),
**caractérisée en ce que**
l'élément de prise (3) peut être déplacé par rapport au bras pivotant (4) par un dispositif de commande qui est adapté à la dépendance de la température spécifique à l'appareil du dispositif sensible à la température.

2. Transmission à manivelle selon la revendication 1, **caractérisée en ce que** le dispositif de commande est accouplé à l'élément de compensation dépendant de la température (7).

3. Transmission à manivelle selon la revendication 2, **caractérisée en ce que** le dispositif de commande est accouplé à l'élément de compensation dépendant de la température par le biais du bras pivotant (4) de l'élément de prise (3).

4. Transmission à manivelle selon l'une quelconque des revendications 1 à 3, **caractérisée en ce que** le dispositif de commande présente une coulisse (6) réalisée dans l'élément de manivelle (2), dans laquelle est guidé l'élément de prise (3).

5. Transmission à manivelle selon l'une quelconque des revendications 1 à 4, **caractérisée en ce que** l'élément de prise (3) peut être déplacé par rapport au bras pivotant (4) dans la direction de son centre de gravité (5).

6. Transmission à manivelle selon l'une quelconque des revendications 1 à 5, **caractérisée en ce que** le centre de gravité (5) du bras pivotant (4) est disposé de manière excentrée par rapport à l'axe de la partie rotative (1) sur l'élément de manivelle (2).

7. Transmission à manivelle selon la revendication 6, **caractérisée en ce que** la ligne entre l'élément de prise (3) et le centre de gravité (5) du bras pivotant (4) forme avec la ligne entre l'élément de prise (3) et l'axe de la partie rotative (1) un angle sensiblement droit.

8. Transmission à manivelle selon l'une quelconque des revendications 1 à 7, **caractérisée en ce que** l'élément de compensation dépendant de la température (7) est supporté sur l'élément de manivelle (2) et présente un bras d'actionnement (8) venant en prise de manière articulée dans le bras pivotant (4), qui est orienté essentiellement vers le centre de gravité (5) du bras pivotant (4).

9. Transmission à manivelle selon la revendication 8, **caractérisée en ce que** le bras d'actionnement (8) de l'élément de compensation (7) est réalisé sous forme d'extrémité libre d'un bilame en forme de spirale.
